Europäisches Patentamt

European Patent Office

Office européen des brevets

(11) Publication number: **0 406 936 A1**

# EUROPEAN PATENT APPLICATION

(21) Application number: 90201669.0

(22) Date of filing: 23.06.90

(51) Int. Cl.5: **F16K 15/14**

(30) Priority: 07.07.89 IT 2138289 U

(43) Date of publication of application:
09.01.91 Bulletin 91/02

(84) Designated Contracting States:
DE ES FR GB IT

(71) Applicant: ADLER S.p.A.
Via Di Vittorio 20/22
Rovereto (Trento)(IT)

(72) Inventor: Morone, Alfio
Via Carnia 20
Milano(IT)

(74) Representative: Raimondi, Alfredo, Dott. Ing.
Prof. et al
Dott. Ing. Prof. RAIMONDI ALFREDO S.r.l.
Piazzale Cadorna 15
I-20123 Milano(IT)

(54) One-way diaphragm valve with controlled central lift.

(57) A one-way valve for the delivery of fluids in the
gaseous or liquid state, particularly for motors and/or
motor vehicle devices that comprises two coaxial
members (20) forming the outer body of which one
is placed on the inlet side and the other on the outlet
side, and between which members (20) is inserted a
diaphragm (40) provided with holes (41) distributed
in a circular ring for the passage of air and an elastic
membrane (50) retained on the diaphragm (40) along
its perimeter and closing the said holes (41), pro-
vided with a central hole (53) corresponding to the
solid part of the said diaphragm (50), the said mem-
brane (50) being capable of deforming elastically
towards the outlet member (20) to open the holes of
the diaphragm (40) and allow the passage of air, the
deformation being determined by the pressure gradient between the upstream and downstream sides
of the valve and being limited by the contact surfaces provided on the outlet (20) member to prevent
deformation and/or fracture of the said membrane
(50).

Fig.2

## ONE-WAY DIAPHRAGM VALVE WITH CONTROLLED CENTRAL LIFT

This invention relates to a valve of the one-way type for fluids in the gaseous or liquid state in which opening and closing of the fluid conduit is effected by means of limited lifting of the central region of an elastic membrane which is secured around its perimeter.

Numerous embodiments of diaphragm valves in which the membrane is normally raised at its perimeter, without any control and/or limitation on the lifting of the membrane, which under the effect of an overload can deform to the extent that it will no longer return perfectly to its initial position with a resulting defective seal when closed, are known in the art.

There therefore arises the technical problem of providing a one-way diaphragm valve in which lifting of the diaphragm is controlled so as to avoid irreversible deformation with consequent malfunctioning, which comprises several easily interchangeable parts in order that several types of valve can be constructed with a reduced need for storage, and which also has small dimensions and a low cost.

These objects are accomplished by this invention which provides a one-way valve for the delivery of fluids in the gaseous or liquid state particularly for motors and/or motor vehicle devices comprising two coaxial members forming the outer body, of which one is placed on the inlet side and the other on the outlet side, between which members is inserted a diaphragm provided with holes distributed in a circular ring for the passage of air and an elastic membrane which is secured to the diaphragm around its perimeter and closes the said holes, provided with a central hole corresponding to the solid part of the diaphragm, the said membrane being capable of elastic deformation towards the outlet member to open the holes in the diaphragm and allow the passage of air, the deformation being determined by the pressure gradient between the upstream and downstream sides of the valve and being limited by the backing surfaces provided in the outlet member to prevent irreversible deformation and/or fracture of the said membrane.

It is also provided that in the one-way valve according to the invention the edge of the central hole in the membrane for the passage of air preferably has a greater thickness than the thickness of the membrane itself and that the said coaxial members forming the outer body are preferably identical and in a mirror image arrangement.

Further details are provided by the following description with reference to the appended drawing, in which:

Figure 1 shows an exploded cross-section of the valve according to the invention,

Figure 2 shows a partial cross-section of the assembled valve.

As illustrated in the figures, valve 10 comprises a pair of coaxial members 20 which are identical, but in a mirror image arrangement, and have a hollow cylindrical portion 21 into which is inserted the feed and delivery pipes, which are not illustrated in the figure, these pipes being held in position by ridges 22 provided on the outer surface of cylinder 21.

Said hollow cylinder 21 is connected to a lower circular part 23 which has within it a circular seat 24 bounded by an edge 25 forming the outer edge of part 23.

Ribs 31 are also provided in the internal connection zone 30 between cylinder 21 and circular part 23.

The two members 20 which are in a mirror image arrangement as illustrated in the figure when made integral by known means form the outer sealing body of the valve and between these is inserted a circular diaphragm 40 and a membrane of elastic material 50 placed between the diaphragm and air outlet member 20.

Diaphragm 40 has a series of holes 41 placed in a circular ring and an annular edge 43 which projects from the lateral edge of the diaphragm in such a way that when diaphragm 40 is inserted between pair of members 20 it is also held in position by the contact between annular edge 43 and edge 25 of member 20.

Membrane 50 is constructed of elastic material and has an edge 52 which is very much greater in thickness than the membrane in order to reinforce the circumference of central hole 53.

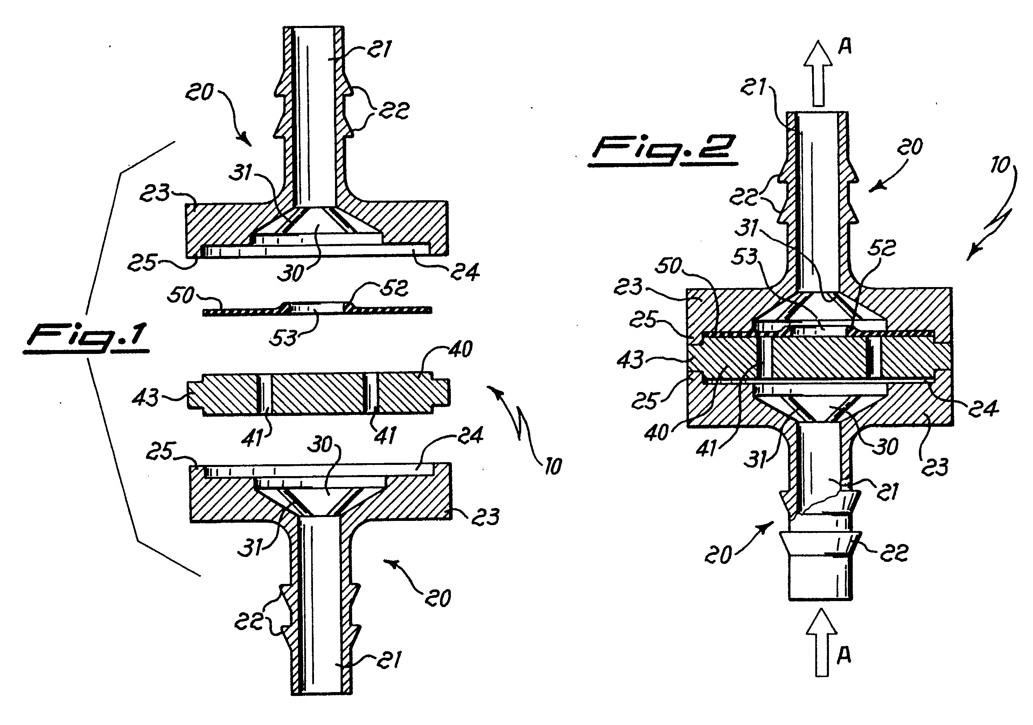

As shown better in Figure 2, when the membrane is inserted between diaphragm 40 and air outlet member 20 it is held in seat 24 by the pressure exerted by circular part 23 of member 20 on diaphragm 50, thus ensuring that the membrane is held in position and is free to rise and fall in its central portion.

When in the resting position the closed valve has membrane 50 lowered in order to close holes 41, but when a pressure gradient is applied between the upstream and downstream sides of the valve air is passed through valve 1 following the path indicated by arrow "A", membrane 50 rising to cause movement in a vertical direction at edge 52 and thus releasing holes 41 which pass the air which is channelled by ribs 31 into outlet cylinder 20.

This lifting of the membrane is however limited in its travel by the presence of said ribs 31 which form a stop member for edge 52, in such a way that even when exceptional overloads are present membrane 50 is not subjected to stresses such as to cause irreversible deformation and/or fracture with a consequent defective return to the closed position of holes 41 in which the delivery holes are no longer again perfectly closed.

## Claims

1) A one-way valve for the delivery of fluids in the gaseous or liquid state, particularly for motors and/or motor vehicle devices characterised in that it comprises two coaxial members forming the outer body of which one is placed on the inlet side and the other on the outlet side, and between which members is inserted a diaphragm provided with holes distributed in a circular ring for the passage of air and an elastic membrane retained on the diaphragm along its perimeter and closing the said holes, provided with a central hole corresponding to the solid part of the said diaphragm, the said membrane being capable of deforming elastically towards the outlet member to open the holes of the diaphragm and allow the passage of air, the deformation being determined by the pressure gradient between the upstream and downstream sides of the valve and being limited by the contact surfaces provided on the outlet member to prevent deformation and/or fracture of the said membrane.

2) A one-way valve according to claim 1, characterised in that the edge of the central passage hole preferably has a thickness greater than that of the membrane.

3) A one-way valve according to claim 1, characterised in that the said coaxial members forming the outer body are preferably placed in a mirror image arrangement.

Fig.2

Fig.1

| | DOCUMENTS CONSIDERED TO BE RELEVANT | | EP 90201669.0 |
|---|---|---|---|

| Category | Citation of document with indication, where appropriate, of relevant passages | Relevant to claim | CLASSIFICATION OF THE APPLICATION (Int. Cl.5) |
|---|---|---|---|
| Y | US - A - 3 176 712 (RAMSDEN) * Detailed description of the invention; fig. 1-4 * | 1,2 | F 16 K 15/14 |
| Y | DE - A - 2 033 705 (PIRELLI SOCIETA) * Page 5, line 1 - page 6, line 25; fig. 1,2 * | 1,2 | |
| A | DE - A1 - 2 803 778 (FA.C. FREUDENBERG) * Totality * | 1 | |
| A | US - A - 3 270 771 (MORGAN et al.) * Totality * | 1,2 | |

TECHNICAL FIELDS
SEARCHED (Int. Cl.5)

F 16 K 15/00
F 16 K 47/00

The present search report has been drawn up for all claims

| Place of search | Date of completion of the search | Examiner |
|---|---|---|
| VIENNA | 19-10-1990 | ROUSSARIAN |